## (19) Europäisches Patentamt
### European Patent Office
### Office européen des brevets

(11) **EP 1 439 523 A1**

(12) # EUROPEAN PATENT APPLICATION
published in accordance with Art. 158(3) EPC

(43) Date of publication:
**21.07.2004 Bulletin 2004/30**

(51) Int Cl.7: **G10L 15/14**, G10L 101/027,
G10L 101/065, G10L 101/10

(21) Application number: **02743274.9**

(22) Date of filing: **25.06.2002**

(86) International application number:
**PCT/ES2002/000312**

(87) International publication number:
**WO 2003/001508 (03.01.2003 Gazette 2003/01)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **25.06.2001 ES 200101468**

(71) Applicant: **Universitat Pompeu-Fabra
08002 Barcelona (ES)**

(72) Inventor: **BATLLE I MONT, Eloi
E-17474 Torroella de Fluvia, Girona (ES)**

(74) Representative: **Garcia Cabrerizo, Francisco et al
OFICINA GARCIA CABRERIZO S.L.
Vitruvio 23
28006 Madrid (ES)**

(54) **METHOD FOR MULTIPLE ACCESS AND TRANSMISSION IN A POINT-TO-MULTIPOINT SYSTEM ON AN ELECTRIC NETWORK**

(57) It consists of the following stages:

1. preprocessing (602) of the audio sequence, consisting of the stages of elimination of the frequencies above a predetermined value with a low-pass filter, and of digitalization of the signal in an analog-to-digital converter.

2. parameter extraction (301), representative of an audio sequence, to produce a parameter vector $o_t$ especially adapted to the identification approach proposed.

3. calculation of the abstract descriptors (302), representative of the $o_t$ parameter vector implemented as Hidden Markov Models, optimized by means of the use of the abstract descriptor-defining database (303) generated during the previous execution of the first phase of the method's learning mode.

4. identification (605) of the audio sequences processed in this manner in an abstract descriptor sequence database (505) generated during the previous execution of a second phase of the method's learning mode.

5. recording the results (607) obtained in the identification stage (605).

AUDIO SIGNAL

FIG. 6

## Description

This invention permits the automatic segmentation and parametrization, without any kind of supervision, of audio sequences by means of abstract descriptors and the subsequent identification of their fragments in a predefined database, or the identification of other similar fragments. The method disclosed herein permits the partition of audio sequences in abstract descriptors that model a process of internal audio generation. Although these descriptors do not represent any physical process they do represent the minimum audio information necessary according to a predetermined, generalizable criterion of similarity.

The search for audio sequences which are similar to a given example is very important, e.g. for indexing and recovering information in large databases. Another clear example of its application is the identification of fragments of music in different environments. This is of vital importance for companies that own copyrights, musical promoters, etc.

The problems in the reliability of automatic systems has, on many occasions, led to the task of musical identification being performed by expert human users.

## Background of the invention

The patent US 4,843,562 Kenyon discloses a system which uses matrixes constructed from audio signal spectrograms. These matrixes are compared with the matrixes of the original database signals. This method has the drawback of the large amount of data that should be stored for large databases, as well as the huge quantity of calculations necessary to compare a spectrogram matrix with the whole database.

Another system is that disclosed, also by Kenyon, in the patent US 5,210,820, in which it employs statistical moments of the signal samples to identify them. With the statistical moments, the system disclosed by Kenyon constructs a characteristic vector of the audio piece. These characteristic vectors are subsequently quantified to differentiate their values to a greater extent by distributing the spaces between vectors in the characteristic multidimensional space. Due to the nature of the calculation of the vector, with this system it is impossible to identify a fragment with a length that is very different to that of the original, nor does it permit reliably detecting the start and finish of the fragment within a larger audio sequence. Another drawback of the Kenyon system is that the characteristics that are extracted from the audio are the statistical moments of its samples. Although this method is quite resistant to noise and interference, it does not permit the search for similarity between two audio fragments, as the statistical moments do not correspond to any useful psycho-acoustic measurement.

A different approach in the field of automatic identification is disclosed in the patent US 5,581,658 of O'Hagan et al. This document discloses a system which uses a neural network to process the "retinal signatures" extracted from the musical fragments. The neural network is trained with every single one of the original pieces that are to be identified. The final decision on the identification is made by a system based on fuzzy logic. Although the system works correctly for a very small number of songs, it has a scalability problem as the number of songs that can be identified is determined by the size of the output layer of the neural network. Another problem this system presents is that each time the database that is to be identified is modified, the whole neural network must be retrained and, therefore, it does not permit flexibility in modifying this database.

Finally, in patent number US 5,918,223, Blum et al., disclose a system which constructs a characteristics vector from the analysis of the signal. This vector is subsequently compared with the vectors corresponding to the original ones from the database using a distance measurement between the vectors. This system permits, with great facility, the incorporation of very diverse characteristic extraction methods of the audio signal, permitting the generation of searches for similarities between songs with psycho-acoustic criteria. Nevertheless, the length of the signal used to calculate the characteristics vector is preset and in the preferred implementation that Blum et al. disclose, this length refers to the entire song. This simplifies the storage of the data of the original songs of reference but loses much flexibility. In this manner, in order to be able to detect fragments, the information of the vectors for very small fragments should be saved. This method becomes completely inefficient for musical fragments to which time stretching techniques have been applied, as the lengths of the reference fragments do not coincide with the fragments to be identified. This process is well adapted to separating into classes, but not to guaranteeing a precise identification.

In consequence, an objective of this invention is to provide a method and system for audio sequence identification which permits a "yes/no" type of precise identification and classifications based on similarity.

Another objective is to provide a method and system that use normal electronic and computer components without having to resort to supercomputers.

Another objective is to provide a method and system that permits its easy scalability by means of the addition of new audio sequences that can be identified.

Another objective is to provide a method and system insensitive to the playing speed of the audio sequences and capable of identifying audio sequence fragments.

And finally, another objective is to provide a method and system for audio sequence identification that greatly surpasses the identification rates of the known methods, and is compatible with the practical disappearance of false identifications.

**Description of the invention**

To obtain the proposed objectives, we go to an identification process that uses abstract descriptors implemented as Hidden Markov Models as a representative element of the audio sequences. The use of Hidden Markov Models is known in voice recognition although there are still some unresolved problems such as, e.g. the acoustic modelling of the sub-phonetic units as they are usually modelled as first-order Markov processes and use linguistically predefined units. This restriction limits the performance of these systems and invalidates their direct application in other fields such as musical identification. To resolve the problem posed, it has been necessary to devise the prior processing of the audio signal, with a new approach which, by means of preprocessing and parameter extraction, conditions the initial audio signal to obtain a parameter vector which is specially adapted to make the comparison of the abstract adaptors implemented as Hidden Markov Models possible.

In principle, and given the properties of the Hidden Markov Models as a double stochastic process, the advantages can be transferred to the audio descriptor model. In other fields of HMM application such as, e.g. automatic speech recognition, each one of the HMM models a phoneme. In the case of music, there is no "phonetic" unit that can be used. We could think of using one model for each one of the musical notes, but this would lead us to a system that would be incapable of identifying musical fragments with sound effects that did not correspond to a certain note. This invention considers a new point of view for the use of HMMs for musical identification and analysis and takes advantage of its double stochastic process property. The "visible" HMM process is the audio signal and the "invisible" HMM process has been shown to be surprisingly useful in modelling the generation of this audio signal. Given the impossibility of modelling all possible instruments and audio effects, as well as all possible registers and notes, the possibility arose of modelling the audio generation from an "invisible" stochastic process and identifying the audio signal, not from the actual signal but from this modelization of the process which generated it. Each one of these music generators is called a descriptor, as it statistically describes the kind of audio signal that can be generated. The good performance of the HMM permits this innovative approach. An unexpected consequence of this particular approach was that, with this system, a time ordered sequence of the music descriptors rather than of the actual music is attained and, therefore, a fragment of it could be identified by comparing the sequence of the descriptors of the audio signal to be identified with the order of the descriptors stored for other musical pieces in a database. As these descriptors are modelled with a HMM, each descriptor is assigned a whole number. Another very important consequence is that, instead of storing many songs in a database with the object of subsequently identifying them, it is only necessary to save the sequence of its descriptors. As the sequence of the descriptors is a single number that represents their occurrence order and length, the memory requirements are minimal.

Each one of the stages that comprise the method, which is the object of the invention, is basically described hereunder. In first place, it describes the preprocessing stage that constitutes the necessary adaptation that the audio signal should undergo to make it compatible with the format that the system will use during the following stages. Next, it describes the parameter extraction stage to form the vector that represents the audio signal information according to a predetermined criteria of similarity, including a method for minimalizing the effects of noise in the audio transmissions as well as also minimalizing the effects of the multiplicative channel (equalizations, fading, etc.) It then details the nucleus of the invention, which consists of the method used for segmentation using abstract descriptors. It then describes the identification stage with the steps to be followed to perform the search in a database using the methods described in this invention. Finally, it describes the result recording stage that permits its operation.

**a) Preprocessing**

The preprocessing of the audio signal will be necessary to homogenize the different possible sources of the signal. In this manner, the signal will be presented to the system with exactly the same format, regardless of its origin. Furthermore, low frequencies are known to have greater representation and their tendency to constitute an invariant of the musical sequence is also known.

For the signals that come from an analog source, the frequency components above a certain limit, equal to half the system's working frequency, should be eliminated from this input signal by applying a low-pass filter. After this, the signal will be digitalized with an analog-to-digital converter with a sample frequency equal to the working frequency. If it is not possible to sample the signal at the correct frequency, it will be sampled at the frequency permitted by the converter and this sample frequency will be modified at a later stage with digital processing techniques to change the sample frequency.

For signals in digital format, the digital processing techniques necessary for its format to be adapted to the system will be applied.

Note that the working sample frequency of this invention has great flexibility and that it will choose that which best describes the type of input signal to be worked with. Despite this flexibility, once this frequency has been set, it will remain the same throughout all the stages of the system. To set a new frequency, the abstract descriptors for this new frequency should be recalculated, as a change in sample frequency almost always implies a change in spectral components and, therefore, in the representation of the signal.

### b) Parameter extraction

Once the signal has been adapted depending on its origin, the system analyses it and extracts a series of parameters that characterize it. These parameters depend on the final application of the system as they have a direct influence on the measurement of similarity used in the identification phase. For identification and classification by timbre and rhythm, one operates in the following manner.

In first place, the signal is fragmented in blocks with overlapping. The block length and the overlapping can vary but they must be equal in the statistic modelling of the descriptors and in the identification of the audio fragments. Typical values of these lengths that appear in voice and audio processing literature are 25 milliseconds for length and overlapping of 10 milliseconds between each block. Despite these typical values, various experiments carried out have shown that longer block lengths permit capturing softer information (as regards time) and that the number of descriptors per second of audio obtained is reduced, thus permitting handling larger databases. In this way, it has been proven experimentally that in many classification applications using this invention, values of 250 milliseconds per block length and 100 milliseconds for overlapping, has been shown to offer very good results.

A pre-emphasis stage enhances the high frequencies present after applying the low-pass filter in the preprocessing stage.

To avoid the effect of borders in the audio sample blocks, a window is applied. The window which typically offers the best results is the Hamming window, which has a cosine shape.

The following step to produce timbral information of the audio signal is to carry out a spectral analysis. A very efficient manner of doing so is by means of the rapid Fourier transform. From this transform, the signal is divided with a block of filters where the output of each filter indicates the energy corresponding to a frequency band.

The system disclosed in this invention permits modifying by applying criteria of similarity. In this way, the parametrization which will be used will directly depend on these criteria. For example, for an identification and classification system according to rhythmic parameters, the rhythm of the fragment to be analysed will be detected by means of techniques to separate the melody and rhythm.

Once the signal block has been analysed using the most suitable method (two methods for two situations have been given as an example), the decorrelation of the parameters will be carried out. This step permits improved modelization of the descriptors from the Hidden Markov Models as they can use diagonal covariance matrixes. To decorrelate the parameters, techniques such as discrete cosine transform (DCT), the analysis of main components or discriminative analysis (linear or nonlinear). After various experiments, we have reached the conclusion that a simple method such as DCT already gives very good results due to the great power and modelling capacity of the abstract descriptors.

Dynamic information can be added to the parameter vectors. This is achieved by calculating the derivatives of the basic parameter vectors. In this manner, the parameter vector is usually extended with its first and second derivative. Although derivatives of a higher order can also be added, the experiments carried out do not endorse their usefulness. Excellent results have been obtained by using the derivatives of the decorrelated vector and a representative function of the energy, formulated as a quadratic expression.

The channel subtraction permits the invention described herein to function well in different environments and makes it capable of classifying audio fragments as identical even though they have been processed by different transmission systems.

For the channel subtraction, the parameters extracted will be passed to the logarithmic domain, so that a convolutional channel (multiplicative in frequency), becomes an additive channel (added to the logarithmic domain). Once the domain has been transformed, the parameter vector sequence will be time filtered. A filter with a double function is applied. On the one hand, the zero situated at low frequency eliminates the distortion component in the logarithmic domain and, therefore, will eliminate the stationary channel component. On the other hand, the filter is used to restrict the variations in the signal. In this way, a great amount of high frequency noise is removed from the log-time domain. If, for example, the objective of the classification system is classification by musical notes, the zero at high frequency will be used to restrict the number of notes per second that is deemed as probable. In this manner, the upper zero will be adjusted to the estimated value of maximum variation, and the lower zero, to the minimum frequency to eliminate the distortion.

The filter used in the experiments that corresponds to the identification and classification by timbral parameters and which is produced by experimental methods is (in its form of transform z)

$$H(z) = \frac{0.4 - 0.81z^{-2} + 0.42z^{-4}}{1 - 0.47z^{-1}}$$

Zeros can also be added to the frequency in which interference appears, such as, e.g. at 50 Hz if the system has interference due to the electrical distribution network.

**c) Calculation of the abstract descriptors**

The audio fragments are identified by means of abstract descriptors. Unlike in Blum, which uses a decision tree on a relatively simple parameter vector in its maximum precision variant, the use of descriptors has been chosen. These descriptors do not have to correspond to a physical reality, as they will be calculated so that the probability of error in the identification stage is minimum. Each one of the descriptors is implemented with a Hidden Markov Model (HMM), so that each parameter vector has a certain probability of belonging to a HMM. In this way a HMM can be seen as a double stochastic process, with a stochastic process that cannot be directly observed (abstract descriptors) and which can only be observed by means of another stochastic process (the physical embodiment of the audio signal) which produces a series of observable parameters. Thus, the descriptors model the internal essence of the signal, but are only linked to the acoustic embodiment of the audio signal by means of a stochastic process. It is for this reason that we can consider that the descriptors do not have to correspond to a physical reality.

The main advantage that the implementation of the abstract descriptors with Hidden Markov Models, and not with other techniques of pattern recognition, means stems from the immunity to noise that the HMM confers it. Each HMM is composed of a determined number of states. It has been shown experimentally that a three-state topology per descriptor offers great consistency. With this topology, the first state represents the coarticulation of the descriptor previous to the current one, the central state represents the stationary part of the descriptor and the final state represents the coarticulation of the current descriptor with the following one. Despite the fact that this topology has better results in the majority of situations, the system described herein permits the use of more complex topologies, even permitting going back in time (abstract) by means of jumping from one state to a previous one. These topologies permit recovering a past instant after an error caused by complex noise.

At each time instant, the parameter vector has a certain probability of belonging to any of the states of any of the HMM. This probability can be modelled from the representation of the density probability function of each state with a sum of guassians or, instead, with vectorial quantification systems. The final probability of belonging to a state will be the combination of this probability density function and another function that will depend on the previous time instant (with the previous parameter vector). If this method is used, jumps caused by impulse noise, which would otherwise cause erroneous jumps from one state to another, are avoided.

The implementation of the abstract descriptors from Hidden Markov Models offer an advantage over other models, such as, e.g. direct vectorial quantification of each parameter vector on each descriptor, which, as it is a probabilistic method, is much more resistant to noise. In addition, the length of each abstract descriptor is not fixed but depends on the audio signal, so that the probability of the descriptor is higher. In this manner, one audio fragment played at different speeds will give exactly the same sequence of descriptors.

The calculation of the models of each descriptor is based on a complex probabilistic calculation derived from an iterative Estimation-Maximization process. To calculate the parameters, it uses a database in which the majority of the audio styles that the system will subsequently have to classify appear. For example, if the system will have to work with the classification of classical music, various representations of classical pieces would have to appear in this training database. Although this is always desirable, it is not always possible. From several experiments carried out by the author in which important situations in which the system would have to work were deliberately suppressed from the database, this did not substantially affect the system's final performance. Therefore, it can be deduced that the database should be as complete as possible to be able to model the probability density functions in an as precise manner as possible but, due to the nature of the abstract descriptors, they are capable of working with fragments of an unknown nature.

In first place, we start with a preliminary segmentation of all the audio sequences in the training database. This initial segmentation has shown not to be very critical and can, therefore, be generated randomly. In other implementations of systems carried out, we have started with an initial segmentation generated by a vectorial quantification of all the fragments. In this case, the system achieves a very similar performance.

The iterative process then calculates the new probability density of each state supposing that these descriptors are those that have generated the sequence. That is, it starts from a sequence and then calculates the descriptors that could have generated it. In the next step, the descriptors thus generated are used to calculate a new sequence of descriptors for the same audio signal.

The process ends when the difference between two descriptor generations is less that a predetermined parameter.

Automatic segmentation of the audio signal will usually be carried out according to predetermined criteria. Nevertheless, this segmentation can serve to identify audio fragments within a database or, instead, to search for similar fragments within this database.

In this second case, we start with a database that is segmented by the abstract descriptors. The sequence of abstract descriptors is extracted from each audio fragment (or whole song) so that it has maximum probability. For this the Viterbi algorithm, or one similar to this, will be used. These descriptor sequences will be saved in a database for their subsequent use. Due to the fact that two similar fragments will have a similar descriptor sequence, this can be used to detect similarities and make the identification.

If the audio source to be identified or classified comes from a continuous source (such as, e.g. radio), the segmentation stage permits extracting the abstract descriptors with minimum time delay. In this way, a descriptor sequence is obtained whilst the audio sequence is being received. The method used to obtain the descriptors in the case of continuous audio signals is basically the same as for fragments. To save it from the obstacle of the inexistence of a start and finish, the invention resorts to the path of maximum probability of the descriptors each certain interval of time and expects the probability of a descriptor to not vary when new parameter vectors are added. At this instant, the system decides if the descriptor is stable and makes no further modifications.

### d) Identification

To identify the fragments and classify them in the database, it uses the concatenation of the states of the abstract descriptors and the subsequent calculation of the partial probability of the fragments from the original pieces with respect to the observation of the audio fragment to be identified.

The system disclosed in this invention is used to calculate the abstract descriptors of the original pieces of audio and their sequences are saved in a database. In this way, the database contains detailed information of the abstract descriptors which are representative of the musical piece as well as its meta-information. This meta-information can contain the author's name, the record company, the recording date, etc. Once all the information of the original fragments has been stored, this invention is used in a second way wherein the system will function as an analysis of the new unknown audio fragments and of those that similarities are to be found with for which it will extract the information from its abstract descriptors. This analysis can be done in real time (with a minimum delay) when the origin of the sequences is in sequence format (e.g. radio origin) or from sequences already recorded in hardware or in the memory of a computer system. A Markov macro-model formed from all the states of all the descriptor Models corresponding to each piece is constructed from these abstract descriptor sequences. A very special characteristic of these macro-models is that they permit an extra input and output probability for each state. That is, it permits beginning the sequence of states with any state at the same time as it permits interrupting the normal sequence of states at any time. The most important effect of this particular construction is the fact that it permits the correct identification of small fragments from the pieces, as it is not necessary for the system to go through all the states.

Due to the nature of the abstract descriptors and their capacity to model an abstract audio representation, the result of these searches will be the most similar musical piece (or which contains it) to the fragment. A numerical break-off point has also been established, from which the system decides that the fragment is an exact part of the original piece, and is not only similar. The result of the searches can be organized according to the differences and, in this way, the system generates a list of candidates which are most similar to the original fragment.

### e) Recording the results.

The generation in a suitable medium of a list of the results of the identification stage which can contain, in addition to the title of the audio signal identified, other values of interest such as the means of diffusion, the date, time, etc.

The practical advantages of the method we have just described are considerable. Thus, whilst with linear correlation techniques a 60% identification rate is achieved, and with fuzzy logic techniques on "retinal signatures" up to 90% can be achieved, with this method, identification rates over 98% can be obtained and, more importantly, with a total absence of false identifications.

### Brief description of the drawings

To complement the description being provided and with the object of helping towards a better understanding of the characteristics of the invention, a detailed description of a preferred embodiment will be made, based on a set of drawings attached to said description, wherein the following is represented with an illustrative, non-limiting character:

Figure 1    shows a diagram of the system complete with all its components.
Figure 2    shows a diagram of the parameter extraction stage.
Figure 3    shows a diagram of the method object of the invention in learning mode, the result of which is the generation
            of a database with the identification characteristics of the abstract descriptors.
Figure 4    shows the topology used in the invention for the Hidden Markov Models.
Figure 5    shows a diagram of the construction process of the abstract descriptor sequence database.
Figure 6    shows the identification process of audio fragments within an audio sequence.
Figure 7    shows a diagram of the calculation process of the abstract descriptors.
Figure 8    shows a generalized diagram of the probability matrix calculation.
Figure 9    shows the functionality of the identification stage.

**Detailed description of a preferred embodiment.**

The application of the system used in this preferred embodiment is that of monitoring several radio stations and automatically extract the play lists of musical pieces for each one of them. For this application, we have chosen a criterion of identification and classification according to timbre and rhythm and, based on which, the parameter extraction stage has been configured.

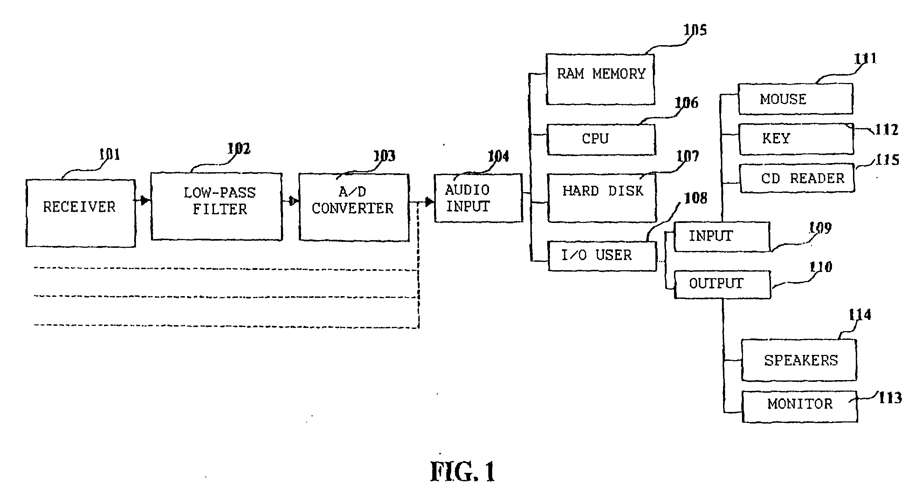

The method of audio signal identification which shall be described is executed in a system that consists of various physical components, as shown in figure 1. This represents a typical configuration with a workstation formed by 256Mb RAM memory (105), a 700 Mhz Pentium II Central Processing Unit (CPU) (106) and a 60 Gb IBM Hard disk (107). The interaction with the user is made through an input/output controller (108), an input controller (109), and an output controller (110). The data is input by the user using a key (112) and a mouse (111). The database of the original songs is entered in the system by means of a x32 CD reader. The results of the system analysis are stored in the hard disk (107) and are eventually acoustically reproduced by Roland Ma-150U speakers (114) and represented on a 19" ADI Microscan monitor (113). The signal from the radio stations is captured on several Pioneer F-104 receivers (101). The analog signal is filtered through an antialiasing low-pass filter (102) and converted to the discrete domain in an analog-to-digital converter (103). These two steps are carried out with a Hoontech 4DWAVE NX soundcard for each radio receiver. The continuous stereo signal is sampled at 22050 Hz and converted to a 16-bit signed signal per sample, passing the signal from the different receivers (101) to an audio input (104).

The system has two fundamental modes of functioning: the learning mode and the identification mode. In first place, the method of the invention is executed in the learning mode, extracting the statistical information from the abstract descriptors. After this, the system is now prepared for the identification phase, where these descriptors are used to identify the musical fragments.

i) **Learning mode. First phase. Determination of the abstract descriptor-defining database (303)**

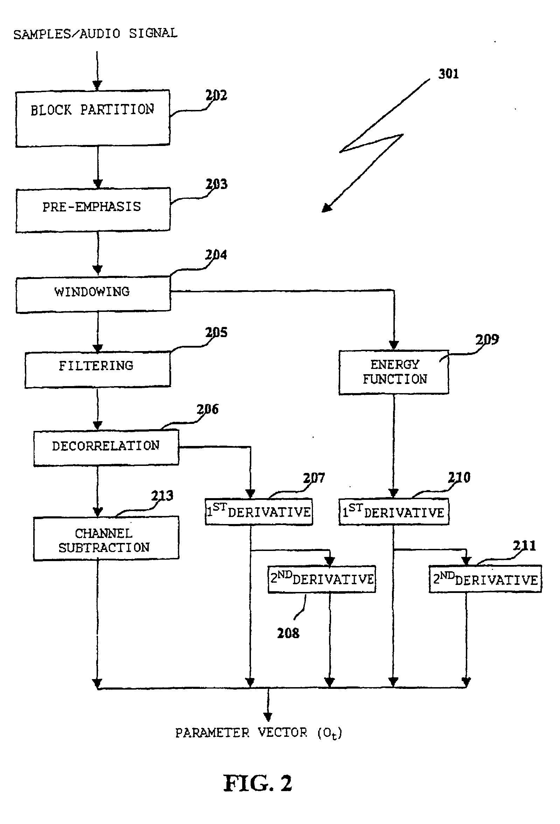

We will firstly describe the functioning in learning mode. See figures 2,3 and 5. Starting from music CD's, the user creates files of songs and they are stored in the hard disk (107). Each one of the songs is sampled at a sample frequency of 22050 Hz and 16 bit signed for each signal sample. Each song is stored in a separate file, each with a different name. The samples are stored sequentially using two octets for each one and the file does not contain any header. The extension of the name of each file will be ".raw". The additional information such as the author and the song title are typed in manually by the user or extracted in an automated manner from a database external to the system. This information is saved in a file with the same name as its audio samples but with the extension ".info". For the abstract descriptors' statistical information, a learning database with 1850 different songs, each with a 2-minute duration, is used.

The samples are read by the system and, as is shown in figure 2, undergo partition in blocks (202) of 250 milliseconds each with overlapping of 100 milliseconds between them. A pre-emphasis process (203) $y[n]=x[n]-0.98x[n-1]$ where $x(n)$ are the block samples at the instant $n$ and $y(n)$ are the samples after the pre-emphasis process (203) is applied to this. At the exit of this stage, a Hamming-type windowing process (204) is applied that consists of multiplying the sample block for a function of the form

$$w[n] = \left(0.54 - 0.46\cos\left(\frac{2\pi}{frameLen - 1}n\right)\right)$$

where *frameLen* is the length of block samples (250 milliseconds). These samples are processed in a filtering stage (205) with a bank of 20 filters with a central frequency distributed according to a logarithmic scale known as Mel scale and described in "Fundaments of Speech Recognition" by Rabiner et al. and Published by Prentice May Signal Processing Series, 1993. From the output of the 20 filters, a vector is constructed that passes to a decorrelation stage (206) performed with the discrete cosine transform, generating a new multidimensional space. Its loqarithm is calculated from the first 14 coefficients and they are stored in the memory in a 14-coefficient vector. From the information of 5 vectors corresponding to 5 blocks of consecutive signals, an approximation of the first decorrelated derivative (207) is calculated. A second decorrelated derivative (208) is calculated with the information of 5 vectors of the first decorrelated derivatives (207). The output vector of the decorrelation stage (206) is filtered in a channel subtraction stage (213) with a digital filter with the form $y[n]=0.99x[n]-0.99x[n-1]+0.98y[n-1]$ where $y[n]$ is the output filter at instant $n$ and $x[n]$ is the input filter at instant n. This filter is used to reduce the effects of the convolutional channel.

Other information used in the parameter extraction stage (301) is the energy function (209) obtained from the sum

$$energy = \sum_{n=1..N} \left( y'[n] \right)^2$$

where $y^1$ is the windowing stage output (204). The first energy derivative (210) is calculated with the information from 5 consecutive blocks and its second energy derivative (211) with the information from 5 consecutive blocks of first energy derivatives (210). With the output information of the channel subtraction stage (213), first energy derivative (210) and second energy derivative (211), a parameter vector $o_t$ is constructed which contains 44 coefficients. The process described in figure 2 is performed for all the sample blocks of all the 1850 files from the database of songs used in the preferred embodiment. This information is stored in the hard disk (107) in one single file called "base.prm". The file does not contain a heading and the values are stored as simple precision floating-point values. The vectors are stored consecutively in the file with no separators between them.

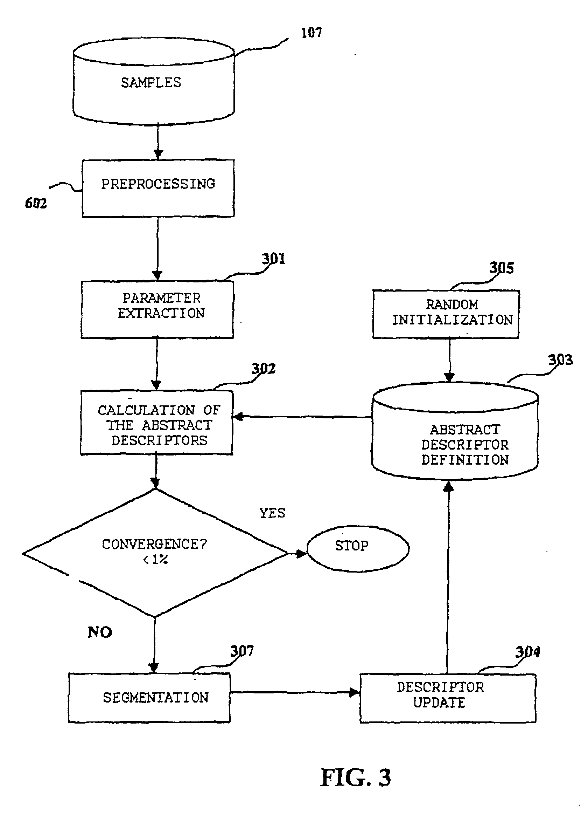

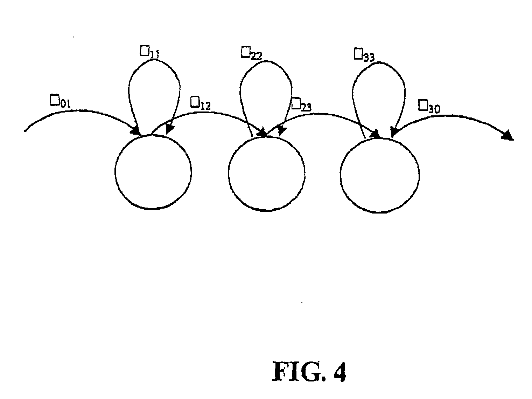

To calculate the abstract descriptor-defining statistic (303) we proceed as shown in figure 3. In first place, it describes the number of descriptors that will sufficiently represent the whole timbral variety of the song database. In our preferred embodiment this number is 16. Each one of these 16 descriptors is modelled with a Hidden Markov Model (HMM) with 3 states and a left-to-right configuration as is shown in figure 4. Each one if the HMM states has a $a_{01}$ input probability for the first state, $a_{12}$ for the second state and $a_{23}$ for the third state, a probability of remaining in the same state of $a_{11}$ $a_{22}$ $a_{33}$, a probability of exiting the state of $a_{12}$ for the first state, $a_{23}$ for the second state and $a_{30}$ for the third state and a probability $b_1(o_t)$ of observing a certain parameter vector $o_t$. Therefore, each HMM will be defined by the values $\lambda=(A, B, \pi)$ where $A$ is the probability matrix of jumping from one state to another, $B$ is the matrix which defines the probabilities of observing a vector between one state and another and • represents the probabilities that the system begins with a state. The initial values of $A$, $B$ and $\pi$ are randomly chosen in a random initialization process (305). With these initial values, we enter into a calculation stage of the abstract descriptors (302) that correspond to the $o_t$ parameter vector sequence in the "base.prm" file. This calculation is made with the Viterbi algorithm for the HMMs as is described in "A Tutorial on Hidden Markov Models and Selected Applications in Speech Recognition", by Lawrence Rabiner and Published in Proceedings of the IEEE. Volume 77, number 2, pages 257 to 286, of February 1989. This sequence of descriptors is saved in a "base.desc" file in ASCII format. A name G0, G1, G2,...G15 is given to each one of the 16 descriptors and the sequence corresponding to the decoding of the "base.rpm" file with Viterbi is saved. In this manner, the aspect of the "base.desc" file will be of the type G0 G5 G1 G3 G7 G8 etc. The repetitions of the two descriptors are merged in one, so that the sequence G0 G3 G3 G2 will be saved as G0 G3 G2. When the new descriptor sequence has been stored in "base.desc", the Baum-Welch algorithm described in "A Maximization Technique Occurring in the Statistical Analysis of Probabilistic Functions of Markov Chains" of Baum et al. and published in the Annals of Mathematical Statistics, volume 41 number 1, pages 164 to 171, 1970, is used in a descriptor updating stage (304), consecutive to a segmentation (307), to obtain the statistical values of the HMMs present in the abstract descriptor-defining database (303) i.e. the values $A$, $B$ and $\pi$ are recalculated so that the probability that the descriptor sequence in "base.desc", and statistically modelled by its $A$, $B$ and $\pi$, have generated the vector sequence in "base.rpm", is maximum. Once the values $A$, $B$ and $\pi$ of the 16 HMMs have been updated, the Viterbi algorithm is again applied to obtain a sequence of abstract descriptors that will be again stored in the "base.desc" file, overwriting its previous content. This new sequence will be used to again update the $A$, $B$ and $\pi$ parameters of the 16 HMMs with the Baum-Welch algorithm. This generates an iterative process which, in each iteration, generates a abstract descriptor-defining statistical description (303) so that it better describes the $o_t$ parameter vector in the "base.prm" file. This algorithm is basically described in "Maximum Likelihood from Incomplete Data via the EM Algorithm" by Dempster et al. in the Journal of the Royal Statistical Society, volume 39, number 1, pages 1 to 38, 1977. This updating process will be stopped when the change in abstract descriptor-defining statistics (303) of one iteration to the next is less that 1%.

**ii) Learning mode. Second phase. Determination of the abstract descriptor sequence database (505).**

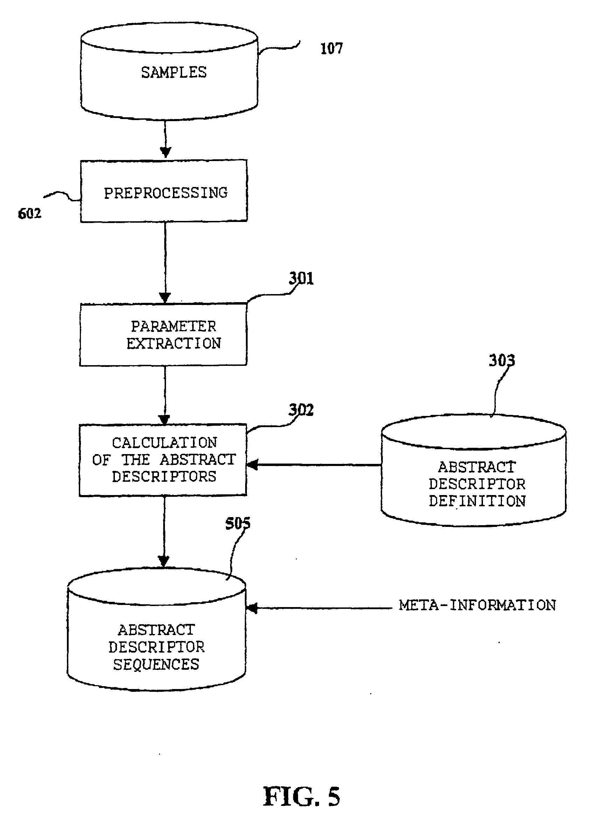

The following step in the learning phase to construct the system will be to generate the abstract descriptor sequence database (505) corresponding to the songs to be subsequently identified. Our embodiment uses a database with 2500 songs, different to those used in the learning phase, that are stored in 166 audio CDs. Each CD is inserted in the CD reader (115). The system automatically reads each one of the songs stored in the CD and performs the process shown in Figure 5 for each one. In first place, the audio signal is prepared, with a sample rate of 22050 Hz and 16-bits signed, and undergoes the parameter extraction process (301) already described. Starting with the $o_t$ parameter vectors, the abstract descriptors (302) are calculated with the same Viterbi algorithm using the abstract descriptor-defining database (303) prepared in the previous learning phase. Each of the descriptor sequences from each song is stored in a text file called "orig.db" within an abstract descriptor sequence database (505). In this file, a sole identifier for each song consisting of an alphanumerical chain with the number of the song, plus a dash, plus the author's name, plus a dash, plus the album name, is saved. This information is typed in manually by the system user as meta-information. After this meta-information, the descriptor sequence is saved in the "orig.db" file in the same format as that used in "base.desc". At the end of the descriptor sequence from each song there is a carriage return.

**iii) Identification mode**

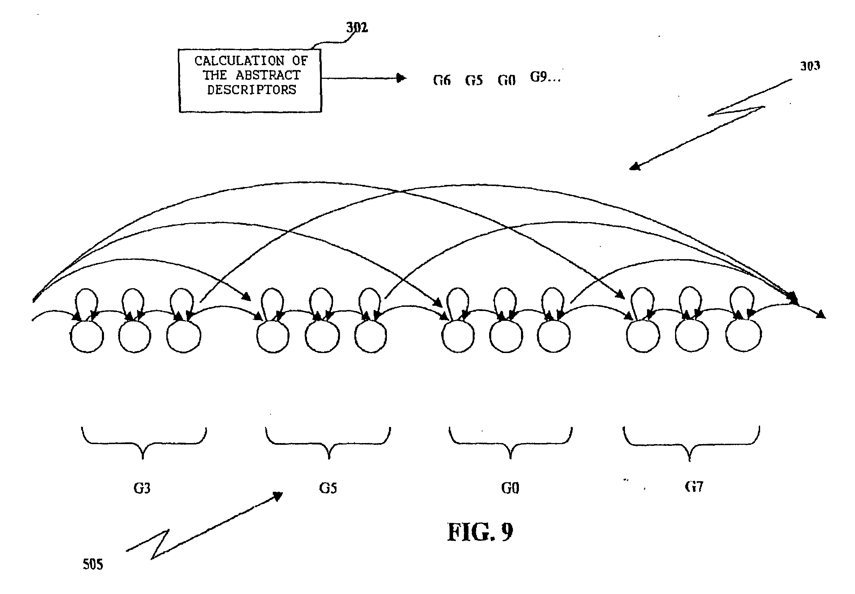

The functionality in the identification mode is shown in figure 9. In first place, a Markov macro-model is constructed with the information from the abstract descriptors of the original pieces. This model is formed by the concatenation of the Hidden Markov Models corresponding to all the descriptors of the piece. In figure 9, the construction of the macro-model for the original piece whose descriptors are G3 G5 G0 G7 is represented. In addition to the simple concatenation of the models with the information about the probabilities contained in the abstract descriptor-defining database (303), the probabilities of additional input and output are added to it. At the start of each section corresponding to an identifier, it adds the probability of the system jumping from the absolute start of the piece until this point. This permits the fragment to be identified to be incomplete and not to begin at the start (which normally happens with commercial radio transmissions). In this manner, there is no penalization for the lack of a fragment. The value of these probabilities is equal to the entry probability $a_{01}$ of each model of each descriptor. The same occurs with the output probabilities. The output probabilities, from each of the parts corresponding to a descriptor until the end, is added to the macro-model. These probabilities are equal to those of output of the $a_{30}$ model. In the example in figure 9, the sequence to be identified is G6 G5 G0 G9... (extracted in real time from a radio sequence). When we calculate the probability of each of the macro-models from each of the original pieces, the system identifies G5 G0 as the central part of the piece in diagram form in figure 9. In our preferred embodiment, the minimum permitted length of a fragment is 5 seconds. Nevertheless, this value can be adjusted depending on the type of musical fragments that are to be identified.

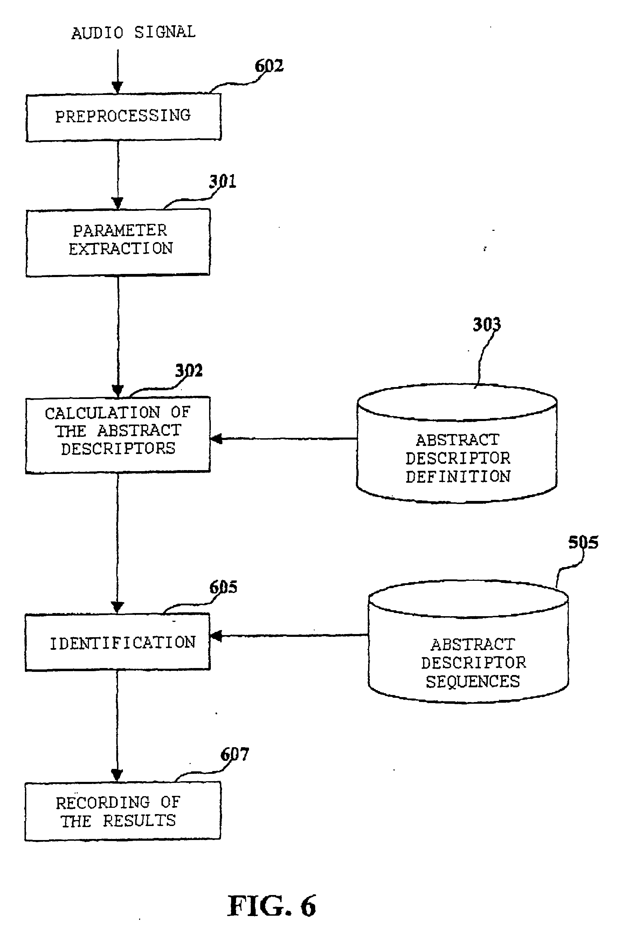

In the identification mode, the process shown in figure 6 is executed or each of the system inputs. The continuous audio sequence (sampled at 22050 Hz and with 16 bits signed) is fragmented in three-minute blocks with a 10-second overlap. Each of these blocks undergoes the parameter extraction process (301) and calculation of the abstract descriptors (302). The identification process (605) is performed as has been shown in figure 9. Although this algorithm gives good results, any other sequence-comparing tool can be used. The output of the comparison using the process of the identification stage (605) together with the abstract descriptor sequence database (505) (orig.db) gives us a text file "tmp.out" where the identification of the song is stored in the database of originals that have obtained the highest point in the comparison as well as the time information of the current day, hour, minute and second. This comparison algorithm not only permits the rapid comparison of identical sequences but also the comparison of similar sequences (e.g. it permits the insertion of "erroneous" descriptors in a sequence. After 10 seconds, a three-minute block is again picked and the process is repeated and its output is added to the "tmp.out" file. In a time instant, the aspect of the "tmp.out" file would be, e.g.

    15/05/2001 12:03:15 title1-author1-album 1
    15/05/2001 12:13:15 title1-author1-album 1
    15/05/2001 12:23:15 title1-author1-album 1
    15/05/2001 12:33:15 title1-author1-album 1

Here the system decides that the song "title1" by "author1" and from "album1" has finished and that the song "title2" by author2" and from "album2" has begun between 12:23:15 and 12:33:15. The play list generated in the result recording stage (607) is updated with the new song. In this manner, the system can identify the songs played and also identify the time they started and finished.

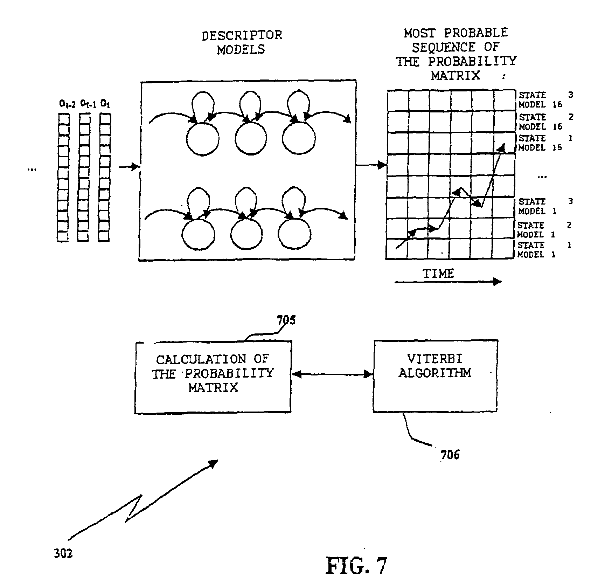

To calculate the most probable sequence of the HMM states represented in figure 7, the process diagram of figure 6 is used. In first place, the parameter extraction (301) is carried out from the audio signal blocks. The probability matrix (705) is calculated from the abstract descriptor (303) defining statistics. Finally, the abstract descriptors (302) are calculated from this matrix using the Viterbi algorithm (706) to find the descriptor sequence and their states with a higher probability.

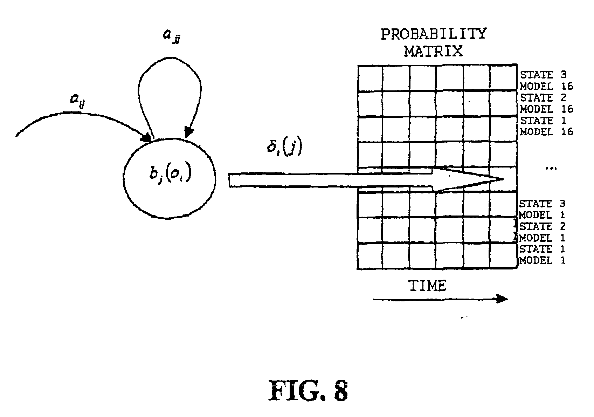

The actual probability matrix construction process is shown in figure 8. This matrix has as many columns as the audio signal has time blocks and as many rows as total states, implementing the 16 HMM preferred embodiment with three states each, with a total of 48 rows in the matrix. The number of columns in the matrix in the preferred embodiment is equal to 100, and an inverse path is performed each time the matrix is filled. Each one of the matrix cells is filled with the value $\delta_1(j)$ according to

$$\delta_1(j) = \quad MAX \quad [\delta_{1-l}(i)a_{ij}]b_j(o_t)$$

$$1 < l < ALL\ STATES$$

where $t$ is the time instant, $j$ is the row number (from 1 to 48) and $o_t$ is the parameter vector where the instant $t$ calculated with the parameter extraction process (301). To calculate the probabilities, the function $b_j(o_1)$ is used according to

$$b_j(o_t) = \sum_{k=1}^{K} \omega_{mjk} \frac{1}{\sqrt{(2\pi)^D |\Sigma_{mjk}|}} e^{-\frac{1}{2}(o_t - \mu_{mjk})\Sigma_{mjk}^{-1}(o_t - \mu_{mjk})}$$

calculated from the parameters $\lambda=(A,B,\pi)$ of the HMM statistics. Each descriptor is modelled with a different HMM. When calculating the function $b_j(o_t)$ the HMM number is represented by the variable $m$. Here, the number of gaussians used to model the probability density function (PDF) for the emission of each parameter vector is represented with $K$. For each of these guassians, the variable $\omega_{mjk}$ represents the weight of each one of the K gaussians within the PDF array. The $\sum E_{mjk}$ matrix represents the covariance matrix for state $j$, model $m$, gaussian $k$. The $\mu_{mjk}$ vectors represent the statistical means for state $j$, model $m$ and gaussian $k$.

We do not go into greater depth as regards working with HMMs as they are aspects well known for any person skilled in the art.

**Claims**

1. Method for audio sequence identification, implemented in a computer, **characterized in that** it consists of the following stages:

   a) Preprocessing (602) of the audio sequence, comprising the stages of elimination of frequencies higher than a predetermined value with a low-pass filter (102), and of digitalization of the signal in a analog-to-digital converter (103),
   b) parameter extraction (301), consisting of, at least, a block partition phase (202), to obtain an $o_t$ parameter vector.
   c) optimized calculation of abstract descriptors (302), representative of the $o_t$ parameter vector, implemented as Hidden Markov Models, comprising the use of an abstract descriptor-defining database (303) generated during the previous execution of the first phase in the method's learning mode,
   d) identification (605) of the audio sequences processed in this manner in an abstract descriptor sequence database (505) generated during the previous execution of a second phase in the method's learning mode,
   e) recording the results (607) obtained in the identification stage (805).

2. Method for audio sequence identification, implemented in a computer, according to claim 1, **characterized in that** if one attempts to carry out an identification or classification according to timbre or rhythm, the parameter extraction (301) consists of, after the initial block partition stage (202), the stages of pre-emphasis (203), windowing (204), filtering (205), decorrelation (208), calculation of the first decorrelated derivative (207), calculation of the second decorrelaced derivative (208), calculation of the energy function (209), calculation of the first energy derivative (210), calculation of the second energy derivative (211) and channel subtraction (213).

3. Method for audio sequence identification, implemented in a computer, according to claim 1, **characterized in that** the block partition stage (202) consists of fragmenting the audio sequence in blocks of a determined length, with a certain overlapping.

4. Method for audio sequence identification, implemented in a computer, according to claim 3, **characterized in that** the length of the block is 250 ms and its overlapping is 100 ms.

5. Method for audio sequence identification, implemented in a computer, according to claim 2, **characterized in that** the pre-emphasis stage (203) consists of enhancing the high frequencies.

6. Method for audio sequence identification, implemented in a computer, according to claim 2, **characterized in that** the windowing stage (204) is performed with a modified cosine-shaped window,

7. Method for audio sequence identification, implemented in a computer, according to claim 2, **characterized in that** the filtering stage (205) consists of the application of the rapid Fourier transform and the division of the audio sequence by means of a block of filters whose central frequency is distributed according to a logarithmic scale, known as the Mel scale, so that the output of each filter is representative of the energy corresponding to a frequency band.

8. Method for audio sequence identification, implemented in a computer, according to claim 2, **characterized in that** the decorrelation stage (206) consists of the use of the method known as discrete cosine transform (DCT).

9. Method for audio sequence identification, implemented in a computer, according to claim 2, **characterized in that** the calculation stage of the first decorrelated derivative (207) consists of the estimate of time variation of the decorrelation stage output vector (208), for five consecutive blocks of signals.

10. Method for audio sequence identification, implemented in a computer, according to claim 2, **characterized in that** the calculation stage of the second decorrelated derivative (208) consists of the estimate of time variation of the calculation stage output vector of the first decorrelated derivative (207), for five consecutive blocks of signals.

11. Method for audio sequence identification, implemented in a computer, according to claim 2, **characterized in that** the calculation stage of the energy function (209) is carried out by means of a quadratic expression of the audio sequence.

12. Method for audio sequence identification, implemented in a computer, according to claim 2, **characterized in that** the calculation stage of the first energy derivative (210) consists of the estimate of the time variation of the output vector of the energy function calculation stage (209), for five consecutive signal blocks.

13. Method for audio sequence identification, implemented in a computer, according to claim 2, **characterized in that** the calculation stage of the second energy derivative (211) consists of estimating the time variation of the output vector of the first energy derivative calculation stage (210), for five consecutive signal blocks.

14. Method for audio sequence identification, implemented in a computer, according to claim 2, **characterized in that** the channel subtraction stage (213) consists of passing the vector to the logarithmic domain.

15. Method for audio sequence identification, implemented in a computer, according to claim 1, **characterized in that** the first phase of the method's learning mode is implemented as a basic iterative process in which, starting from a random initialization (305) of the abstract descriptor-defining database (303), it then proceeds with the calculation of the abstract descriptors (302), segmentation (307), and updating of the descriptors (304) in the abstract descriptor-defining database (303); so that, starting from a sequence of abstract descriptors, it calculates the probability density of the abstract descriptors that could have generated it and, next, the new sequence generated by these last abstract descriptors, which will be different from the starting sequence, the process stopping when it converges below a predetermined parameter.

16. Method for audio sequence identification, implemented in a computer, according to claim 1, **characterized in that** the abstract descriptor calculation stage (302) uses the Viterbi algorithm (706) to calculate a probability matrix (705) representative of the significant values of the abstract descriptor-defining database (303).

**17.** Method for audio sequence identification, implemented in a computer, according to claim 15, **characterized in that** the abstract descriptor updating stage (304) consists of the use of the Baum-Welch algorithm.

**18.** Method for audio sequence identification, implemented in a computer, according to claim 1, **characterized in that** sixteen Hidden Markov Models, each with three possible states, are used in the implementation of the abstract descriptors.

**19.** Method for audio sequence identification, implemented in a computer, according to claims 1 and 16, **characterized in that** the second phase of the method's learning mode consists of the stages of preprocessing (602), parameter extraction (301), calculation of the abstract descriptors (302), optimized by the use of an abstract descriptor-defining database (303) to produce the abstract descriptor sequence database (505); so that the latter will contain the most probable sequences of the abstract descriptors in the probability matrix (705).

**20.** Method for audio sequence identification, implemented in a computer, according to claim 1, **characterized in that** the identification stage (605) consists of the comparison of the abstract descriptor sequence from an audio signal by means of the stages of preprocessing (602), parameter extraction (301) and calculation of the abstract descriptors (302), optimized by means of the abstract descriptor-defining database (303), with the sequences stored in the abstract descriptor sequence data base (505).

**21.** Method for audio sequence identification, implemented in a computer, according to claim 20, **characterized in that**, it further determines the optimum length of time of the abstract descriptors so that the probability of the sequence produced is the maximum.

**FIG. 1**

EP 1 439 523 A1

FIG. 2

FIG. 3

**FIG. 4**

SAMPLES — 107

↓

602 ⟋ PREPROCESSING

↓

301 ⟍ PARAMETER EXTRACTION

↓

302 ⟍ CALCULATION OF THE ABSTRACT DESCRIPTORS ← ABSTRACT DESCRIPTOR DEFINITION — 303

↓

505 ⟍ ABSTRACT DESCRIPTOR SEQUENCES ← META-INFORMATION

**FIG. 5**

AUDIO SIGNAL

↓

PREPROCESSING — 602

↓

PARAMETER EXTRACTION — 301

↓

CALCULATION OF THE ABSTRACT DESCRIPTORS — 302 ← ABSTRACT DESCRIPTOR DEFINITION — 303

↓

IDENTIFICATION — 605 ← ABSTRACT DESCRIPTOR SEQUENCES — 505

↓

RECORDING OF THE RESULTS — 607

# FIG. 6

FIG. 7

FIG. 8

EP 1 439 523 A1

302

CALCULATION OF
THE ABSTRACT
DESCRIPTORS

G6   G5   G0   G9...

303

G3

G5

G0

G7

505

FIG. 9

**EP 1 439 523 A1**

<table>
<tr><td colspan="2"><strong>INTERNATIONAL SEARCH REPORT</strong></td><td>International application No.<br>PCT/ES02/00312</td></tr>
</table>

| A. | CLASSIFICATION OF SUBJECT MATTER |
|---|---|

**IPC 7** G 10 L 15 / 14 , 101 : 027 , 101 : 065 , 101 : 10 .

According to International Patent Classification (IPC) or to both national classification and IPC

| B. | FIELDS SEARCHED |
|---|---|

Minimum documentation searched (classification system followed by classification symbols)

**IPC 7** G 10 L 15 / 14 , 101 : 027 , 101 : 065 , 101 : 10 .

Documentation searched other than minimum documentation to the extent that such documents are included in the fields searched

Electronic data base consulted during the international search (name of data base and, where practicable, search terms used)

EPODOC, WIPL, PAJ, INSPEC , CIBEPAT.

| C. | DOCUMENTS CONSIDERED TO BE RELEVANT |
|---|---|

| Category* | Citation of document, with indication, where appropriate, of the relevant passages | Relevant to claim No. |
|---|---|---|
| X | EP 0805434 A2 (MICROSOFT CORPORATION) 05.11.1997 , see the whole document | 1,3,16,17,19,20. |
| A | | 2,4,5,15,18. |
| X | US 5890111 A (JAVKIN ET AL.) 30.03.1999 , see the whole document | 1,3,16,17 |
| A | | 2,4,5,18 |
| A | EP 0903728 A2 (NORTHERN TELECOM LIMITED) 24.03.1999 see the whole document | 1-5,15-20. |
| A | US 6182036 B1 (POPPERT) 30.01.2001 | |

| ☐ Further documents are listed in the continuation of Box C. | ☒ See patent family annex. |
|---|---|

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30.09.02** | **October ,11,2022 (10,11,02)** |

| Name and mailing address of the ISA/ **S.P.T.O** | Authorized officer |
|---|---|
| Facsimile No. +34 91 349 53 04 | Telephone No. +34 91 349 53 82 |

Form PCT/ISA/210 (second sheet) (July 1992)

22

## INTERNATIONAL SEARCH REPORT
Information on patent family members

International Application No

PCT/ES02/00312

| Patent document cited in search report | Publication date | Patent familiy member(s) | Publication date |
|---|---|---|---|
| EP 0805434 A2 | 05.11.1997 | CN 1171592 A | 28.01.1998 |
| | | JP 10063291 A | 06.03.1998 |
| | | US 5937384 A | 10.08.1999 |
| US 5890111 A | 30.03.1999 | JP10260696 A | 29.09.1998 |
| EP 0903728 A2 | 24.03.1999 | US 6092045 A | 18.07.2000 |
| US 6182036 B1 | 30.01.2001 | CN 1264889 A | 30.08.2000 |
| | | GB 2347775 AB | 13.09.2000 |
| | | JP 2000250576 A | 14.09.2000 |

Form PCT/ISA/210 (patent family annex) (July 1992)